# FASCICULE DE BREVET EUROPEEN

(11) **EP 2 089 193 B1**
(45) Date de publication et mention de la délivrance du brevet: **07.07.2010**
(21) Numéro de dépôt: 07847759.3
(22) Date de dépôt: 04.12.2007
(51) Int. Cl.: B25J 15/00, B62D 65/06

(54) **PRÉHENSEUR DE PIÈCES DE TÔLERIE DE TAILLE ET/OU DE TYPES DIFFÉRENTS**
GREIFER ZUM ERGREIFEN VON BLECHTEILEN UNTERSCHIEDLICHER GRÖSSEN UND/ODER ARTEN
GRIPPER FOR GRIPPING SHEET METAL PARTS OF DIFFERENT SIZES AND/OR TYPES

(30) Priorité: 04.12.2006 FR 0655292
(43) Date de publication de la demande: 19.08.2009
(73) Titulaire: Renault SAS, 92100 Boulogne Billancourt (FR)
(72) Inventeur: GRARE, Pierre, 91420 Morangis (FR); WAHL, Michel, 78210 St Cyr L'Ecole (FR)
(86) Numéro de dépôt international: PCT/EP2007/063255
(87) Numéro de publication internationale: WO 2008/068249

(56) Documents cités:
- EP-A1- 0 470 458
- DE-A1- 3 723 415
- GB-A- 2 242 168
- JP-A- 2000 296 726
- JP-A- 2003 230 964
- JP-A- 2004 148 486
- JP-A- 2005 111 573
- JP-A- 2005 125 456
- US-A1- 2004 130 085

## Description

### Domaine de l'invention

L'invention concerne la manipulation de tôles dont il existe des tailles différentes et des types différents. On pense, en particulier, aux panneaux de portières de véhicules automobiles, dans le cadre d'une chaîne de fabrication ou de montage.

### Art antérieur et problème posé

Dans le cadre de la fabrication des portières de véhicules automobiles, il est nécessaire de manipuler des pièces de tôlerie, telles que des panneaux constituant, une fois assemblés avec d'autres pièces, une portière latérale.

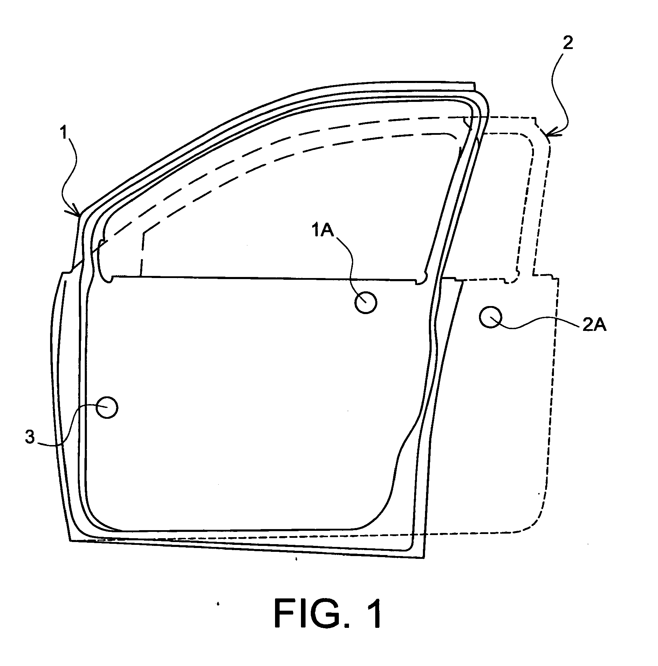

En effet, en se reportant à la figure 1, deux panneaux différents de portière avant de véhicule sont représentés de façon superposée pour mieux montrer qu'ils sont de types différents. Le panneau, référencé 1, est moins long et un peu plus haut que le panneau, référencé 2 (représenté en traits interrompus). Par contre, ils ont été représentés dans une position où un de leurs trous de positionnement, à savoir ceux référencés 3 et placés dans la même région que chaque panneau, sont superposés, c'est-à-dire situé au même endroit. Du fait que ces panneaux 1 et 2 sont de types différents, le deuxième trou de positionnement qui équipe chacun de ces panneaux se trouve à des endroits différents. En effet, le deuxième trou de positionnement 1A du premier panneau 1 se trouve plus près du trou de positionnement commun 3 que le deuxième trou de positionnement 2A du panneau 2.

Actuellement, pour manipuler ces panneaux de type différent, il est prévu, pour chaque type de panneau, de réaliser un ou plusieurs préhenseurs adaptés à chaque type de panneau de portière et pour chaque nouveau véhicule, comme décrit notamment dans les demandes de brevet JP 2005-125456, qui correspond au préambule de la revendication 1, et JP 2004-148486. Ceci nécessite, au coup par coup, des frais d'étude et de réalisation de ces moyens spécifiques de préhension.

En conséquence, le but principal de l'invention est de remédier à cet inconvénient, afin d'éviter de construire, pour chaque type de panneau de porte de véhicule, un préhenseur spécifique.

### Résumé de l'invention

A cet effet, l'objet principal de l'invention est un préhenseur de pièces de tôlerie, de taille et/ou de type différent, présentant chacune deux trous de préhension, le préhenseur comprenant un châssis sur lequel sont montés deux dispositifs multifonctions, comportant chacun un doigt de positionnement destiné à venir chacun dans un des deux trous de positionnement de la pièce de tôlerie, et des moyens de préhension de la pièce de tôlerie.

Selon l'invention, le préhenseur est caractérisé en ce qu'un premier des dispositifs multifonctions est mobile en translation sur le châssis grâce à des moyens de translation et en ce qu'il comprend deux appuis anti-basculement placés sur une poutre d'extrémité, de part et d'autre du deuxième dispositif multifonction.

Dans la réalisation envisagée du châssis, celui-ci comporté :
- une poutre centrale sur lequel le premier des deux dispositifs multifonctions est monté mobile le long de l'axe longitudinal de cette poutre centrale ; et
- une poutre d'extrémité placée perpendiculairement à une extrémité de la poutre centrale et sur laquelle est fixé le deuxième dispositif.

La réalisation préférentielle des moyens de préhension des dispositifs multifonctions prévoit que ceux-ci soient constitués de deux doigts escamotables placés des deux côtés du doigt de positionnement.

La réalisation préférentielle des moyens de translation du premier dispositif multifonction est constituée d'un actionneur linéaire à guidage à billes.

### Liste des figures

L'invention et ses différentes caractéristiques techniques seront mieux comprises à la lecture de la description suivante, accompagnée de plusieurs figures représentant respectivement :
- figure 1, déjà décrite, deux panneaux de portière de véhicule automobile devant être manipulés par le préhenseur selon l'invention ;
- figure 2, en vue cavalière, le préhenseur selon l'invention ; et
- figure 3, en vue cavalière, l'utilisation du préhenseur selon l'invention sur un panneau de portière de véhicule automobile.

### Description détaillée d'une réalisation de l'invention

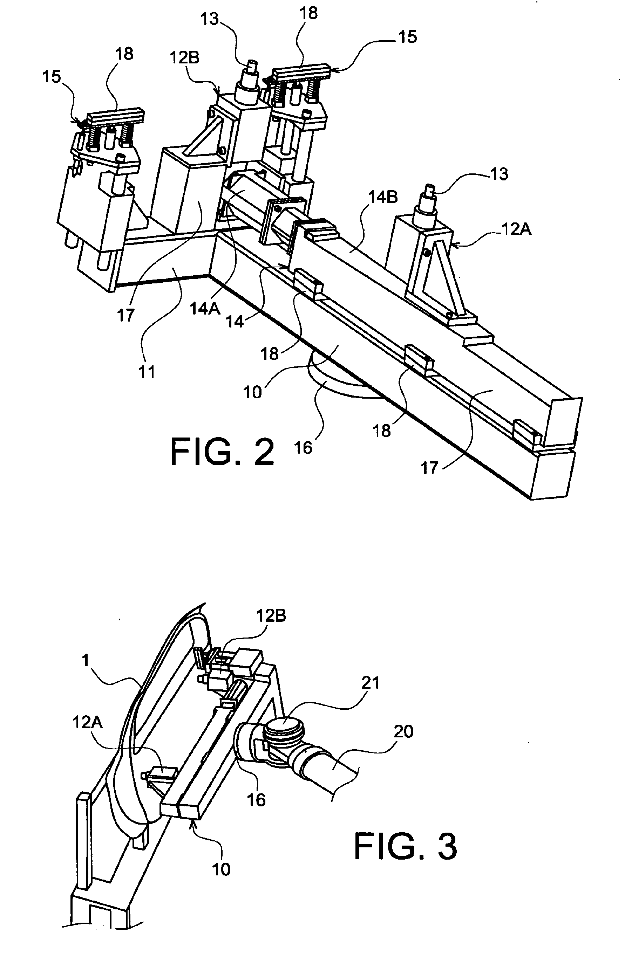

En référence à la figure 2, le préhenseur selon l'invention comprend principalement un châssis sur lequel sont montés les éléments fonctionnels du préhenseur. Ce châssis est constitué d'une poutre centrale 10 constituant la pièce principale du châssis. C'est par son intermédiaire que le préhenseur sera porté par un robot de manipulation, par l'intermédiaire d'un élément de liaison 16 placé en dessous de cette poutre centrale 10. A une extrémité de celle-ci est fixée, perpendiculairement, une poutre d'extrémité 11, de manière à ce que l'ensemble forme un T.

Les éléments fonctionnels sont principalement constitués par deux dispositifs multifonctions 12A et 12B. Le premier dispositif multifonction 12A est monté mobile en translation longitudinale sur la poutre centrale 10, c'est-à-dire qu'il peut se déplacer le long de l'axe longitudinal de cette poutre centrale 10. Dans la réalisation représentée, cette translation est assurée par un actionneur linéaire 14 dont une partie fixe 14A est solidaire d'une structure fixe 17, elle-même fixée à l'extrémité de la poutre centrale 10 sur la poutre d'extrémité 11. L'autre partie de l'actionneur 14 est une partie mobile 14B, qui coulisse sur la poutre centrale 10, par l'intermédiaire de coussinets de translation 18 le premier dispositif multifonction 12A.

D'autre part, le deuxième dispositif multifonction 12B est monté fixe sur la poutre d'extrémité 11, par l'intermédiaire de la structure support 17.

Les deux dispositifs multifonctions 12A et 12B disposent chacun d'un doigt de positionnement 13 faisant saillie vers le haut dans la position dans laquelle le préhenseur est représenté sur cette figure 2.

Le premier dispositif multifonction 12A étant mobile par rapport au châssis du préhenseur, c'est-à-dire par rapport au deuxième dispositif multifonction 12B, la distance entre les deux doigts de préhension 13 de ces deux dispositifs multifonctions 12A et 12B est variable. Ainsi, elle peut s'adapter à la distance séparant deux trous de positionnement 3, 1A et 2A, d'un panneau de portière de véhicule, tel que représenté à la figure 1. Le préhenseur selon l'invention, tel qu'il est décrit sur cette figure 2, peut s'adapter à différents types de panneaux de portières à manipuler. De plus, ces dispositifs 12A et 12B sont munis de moyens de préhension pour aider à saisir et solidariser momentanément un panneau de portière sur le préhenseur. Ces moyens de préhension sont en fait constitués, pour chacun des dispositifs multifonctions 12A et 12B, de deux doigts escamotables, non représentés sur ces figures, mais pouvant faire saillie à la demande, de part et d'autre du doigt de positionnement 13 et pénétrer dans des excavations prévues du panneau à saisir, de manière à solidariser celui-ci de l'ensemble du préhenseur. Ainsi, un panneau pourra être saisi par ce dernier et déplacé, dans la mesure où le préhenseur est solidaire d'un robot de manipulation, non représenté sur cette figure.

L'ensemble se complète de deux appuis anti-basculement 15, montés chacun à l'extrémité de la poutre d'extrémité 11, et dont les tampons 18, placés sur la partie supérieure de ceux-ci, sont à une hauteur sensiblement inférieure à celle du sommet du doigt de préhension 13 du deuxième dispositif multifonction 12B. Ils permettent, lorsque le préhenseur est en phase de positionnement, c'est-à-dire lors que les doigts de positionnement 13 arrivent dans les trous de positionnement du panneau à saisir, à ce que ce dernier ne bascule pas et soit immobilisé en grande partie de manière à ce que la préhension puisse se faire. La hauteur des tampons 18 des appuis anti-basculement 15 est prévue pour que ceux-ci viennent en contact du panneau, lorsque le doigt de positionnement 13 du dispositif multifonction 12B de la poutre d'extrémité 11 se trouve dans son trou de positionnement. Bien entendu, cette hauteur doit être réglable suivant le panneau à saisir.

Ces deux appuis anti-basculement 15 permettent également de compenser les différences de positions des panneaux de portière, liées aux différentes formes de ceux-ci et empêchent toute rotation de basculement de celui-ci. Ils sont constitués d'unités, constituées elles-mêmes d'un vérin guidé avec un bloqueur de tige, équipé d'un système de détection de présence de pièce. Lors de l'approche d'une pièce, à savoir un panneau de portière, celle-ci est détectée, et un signal d'information est envoyé à l'unité de commande du poste de montage et/ou soudage pour que celle-ci soit bloquée en position de travail.

En signalant que la longueur de déplacement du premier dispositif multifonction 12A, grâce à l'utilisation de l'actionneur 14, est de 500 mm, on peut donc comprendre que le préhenseur puisse s'adapter à un grand nombre de types différents de panneaux à manipuler.

La figure 3 montre le préhenseur selon l'invention, fixé sur un robot 20, par l'intermédiaire d'un élément support 16. Il est schématisé par la poutre centrale 10 et les deux dispositifs multifonctions 12A et 12B dont le doigt de préhension a pénétré un panneau de portière de véhicule 1. On voit que, suivant les mouvements du robot, et notamment de sa tête 21, le panneau peut être manipulé dans un espace défini par le champ d'action du robot 20. Il pourra donc être saisi à un endroit, le préhenseur utilisant la distance variable entre les deux doigts de positionnement 13 des deux dispositifs multifonctions 12A et 12B pour se positionner sur le panneau déplacé et reposé à un autre endroit.

Le préhenseur selon l'invention peut donc être utilisé avec de nombreux types de panneaux de portières différents pour pouvoir être mis en place sur des chaînes de montage ou de fabrication de véhicules de types différents.

## Revendications

1. Préhenseur de pièces de tôlerie de taille et/ou de types différents, présentant chacune deux trous de préhension (1A, 2A, 3), le préhenseur comprenant un châssis sur lequel sont montés deux dispositifs multifonctions (12A, 12B), comportant chacun un doigt de positionnement (13) destiné à venir chacun dans un des deux trous de positionnement (1A, 2A, 3) de la pièce de tôlerie, et des moyens de préhension de la pièce de tôlerie,
le préhenseur étant **caractérisé en ce que** :
- un premier (12A) des dispositifs multifonctions (12A, 12B) est mobile en translation sur le châssis grâce à des moyens de translation,
- et le préhenseur comprend deux appuis anti-basculement (15) placés sur une poutre d'extrémité (11), de part et d'autre du deuxième dispositif multifonction (12B).

2. Préhenseur selon la revendication 1, **caractérisé en ce que** le châssis comprend :
- une poutre centrale (10) sur laquelle le premier (12A) des deux dispositifs multifonctions (12A, 12B) est monté mobile le long de l'axe de la poutre centrale (10) ; et
- une poutre d'extrémité (11) placée perpendiculairement à une extrémité de la poutre centrale (10) et sur laquelle est fixé le deuxième dispositif multifonction (12B).

3. Préhenseur selon la revendication 1, **caractérisé en ce que** les moyens de préhension des dispositifs multifonctions (12A, 12B) sont constitués par deux doigts escamotables placés des deux côtés du doigt de positionnement (13) sur chacun des deux dispositifs multifonctions (12A, 12B).

4. Préhenseur selon la revendication 1, **caractérisé en ce que** les moyens de translation du premier dispositif multifonction (12A) sont constitués d'un actionneur linéaire (14) à guidage à billes.

## Claims

1. Gripper for sheet metal parts of different sizes and/or types, each having two gripper holes (1A, 2A, 3), the gripper comprising a framework on which there are mounted two multifunction devices (12A, 12B) each comprising a positioning dowel (13) each intended to fit into one of the two positioning holes (1A, 2A, 3) of the sheet metal part, and means of gripping the sheet metal part,
the gripper being **characterized in that**:
- a first (12A) of the multifunction devices (12A, 12B) is capable of translational movement on the framework by virtue of translational means,
- and the gripper comprises two anti-tilt supports (15) positioned on an end beam (11), one on each side of the second multifunction device (12B).

2. Gripper according to Claim 1, **characterized in that** the framework comprises:
- a central beam (10) on which the first (12A) of the two multifunction devices (12A, 12B) is mounted such that it can move along the axis of the central beam (10); and
- an end beam (11) positioned at right angles to one end of the central beam (10) and to which the second multifunction device (12B) is attached.

3. Gripper according to Claim 1, **characterized in that** the gripping means of the multifunction devices (12A, 12B) consist of two retractable dowels positioned on the two sides of the positioning dowel (13) on each of the two multifunction devices (12A, 12B).

4. Gripper according to Claim 1, **characterized in that** the translational means of the first multifunction device (12A) consist of a ball-type guided linear actuator (14).

## Patentansprüche

1. Greifer zum Ergreifen von Blechteilen unterschiedlicher Größe und/oder Art, die jeweils zwei Greiflöcher (1A, 2A, 3) aufweisen, wobei der Greifer einen Rahmen aufweist, an dem zwei Mehrfunktionsvorrichtungen (12A, 12B) angebracht sind, die jeweils einen Positionierfinger (13), der jeweils in eines der beiden Positionierlöcher (1A, 2A, 3) des Blechteils gelangen soll, und Mittel zum Ergreifen des Blechteils aufweisen,
wobei der Greifer **dadurch gekennzeichnet ist, dass**:
- eine erste (12A) der Mehrfunktionsvorrichtungen (12A, 12B) dank Mitteln zur translatorischen Verschiebung an dem Rahmen translatorisch beweglich ist,
- und der Greifer zwei Anti-Kippstützen (15) aufweist, die auf einem Endträger (11) auf beiden Seiten der zweiten Mehrfunktionsvorrichtung (12B) platziert sind.

2. Greifer nach Anspruch 1, **dadurch gekennzeichnet, dass** der Rahmen Folgendes umfasst:
- einen mittleren Träger (10), auf dem die erste (12A) der beiden Mehrfunktionsvorrichtungen (12A, 12B) beweglich entlang der Achse des mittleren Trägers (10) angebracht ist; und
- einen Endträger (11), der senkrecht zu einem Ende des mittleren Trägers (10) platziert ist und auf dem die zweite Mehrfunktionsvorrichtung (12B) befestigt ist.

3. Greifer nach Anspruch 1, **dadurch gekennzeichnet, dass** die Mittel zum Ergreifen der Mehrfunktionsvorrichtungen (12A, 12B) durch zwei ausklappbare Finger gebildet werden, die auf beiden Seiten des Positionierfingers (13) an jeder der beiden Mehrfunktionsvorrichtungen (12A, 12B) platziert sind.

4. Greifer nach Anspruch 1, **dadurch gekennzeichnet, dass** die Mittel zur translatorischen Bewegung der ersten Mehrfunktionsvorrichtung (12A) durch ein Linear-Stellglied (14) mit Kugelführung gebildet werden.
